# EUROPÄISCHE PATENTSCHRIFT

(11) **EP 1 230 779 B1**
(45) Veröffentlichungstag und Bekanntmachung des Hinweises auf die Patenterteilung: **18.05.2005**
(21) Anmeldenummer: 99974202.6
(22) Anmeldetag: 19.11.1999
(51) Int. Cl.: H04L 29/06, G06K 7/00

(54) **VERFAHREN, CHIPKARTE, UND VORRICHTUNG FÜR EINE LOGISCHE SCHNITTSTELLE ZWISCHEN ZWEI ANWENDUNGEN**
METHOD, CHIPCARD AND APPARATUS FOR A LOGICAL INTERFACE BETWEEN TWO APPLICATIONS
PROCEDE, CARTE PUCE ET DISPOSITIF POUR UNE INTERFACE LOGIQUE ENTRE DEUX APPLICATIONS

(43) Veröffentlichungstag der Anmeldung: 14.08.2002
(73) Patentinhaber: Swisscom Mobile AG, 3050 Bern (CH)
(72) Erfinder: HUBER, Adriano, CH-6600 Locarno (CH)
(74) Vertreter: P&TS Patents & Technology Surveys SA
(86) Internationale Anmeldenummer: PCT/CH1999/000552
(87) Internationale Veröffentlichungsnummer: WO 2001/039463

(56) Entgegenhaltungen:
- EP-A- 0 627 835
- EP-A- 0 652 666

## Beschreibung

Die vorliegende Erfindung betrifft ein Verfahren, mit welchem eine erste Anwendung über eine logische Schnittstelle auf Komponenten einer zweiten Anwendung zugreifen kann, auch wenn keine Dataeinheit für den Zugriff auf diese Komponente im Kommunikationsprotokoll zwischen den beiden Anwendungen vorgesehen ist.

Verschiedene Anwendungen, insbesondere Softwareanwendungen, können über logische Schnittstellen die man als API (Application Protocol Interface) bezeichnet miteinander kommunizieren. Wenn die erste Anwendung auf eine Komponente der zweiten Anwendung zugreifen will, um damit beispielsweise eine Funktion x = F (P1, P2) ausführen zu lassen, sendet sie einen Befehl über diese API-Schnittstelle. Die zweite Anwendung die den Befehl erhält, kann ihn dekodieren und die entsprechende Funktion F durchführen. Beispielsweise kann die zweite Anwendung der ersten Anwendung über die API-Schnittstelle eine Antwort übergeben.

Solche Befehle und Antworten werden üblicherweise als strukturierte Dataeinheiten kodiert, die man APDU (Application Packet Data Unit) nennt. Ein APDU besteht üblicherweise aus einem Vorsatz (" Header") und einem Inhaltsteil ("Body"), wobei der Vorsatz die auszuführende Instruktion und die Instruktionsparameter angibt und der (nicht immer vorhandene) Inhaltsteil Daten enthält. Dieses Protokoll ist unter anderem in der ISO-Norm ISO/IEC 7816, Teil 4 beschrieben. Weitere Befehle werden in systemspezifischen Dokumenten spezifiziert (z. B. GSM 11.11, GSM 11.14).

Dieser Mechanismus wird unter anderem verwendet, um auf Komponenten zugreifen zu können, die von Anwendungen in Chipkarten zur Verfügung gestellt werden. Auf diese Weise kann beispielsweise eine Anwendung in einem Mobiltelefon, beispielsweise eine Browseranwendung, auf Komponenten zugreifen, beispielsweise auf Sicherheitsfunktionen F, die von einer Chipkarte im Mobiltelefon zur Verfügung gestellt werden. Der gleiche Mechanismus wird jedoch auch für die Kommunikation zwischen anderen Anwendungen in anderen Vorrichtungen verwendet.

Die Definition der API-Schnittstelle und die Standardisierung der APDU die von Chipkarten verstanden werden, erfolgt meistens in Standardisierungsgremien oder wird von einzelnen Firmen vorgeschlagen. Aus Kompatibilitätsgründen zwischen Anwendungen von verschiedenen Anbietern, unter anderem zwischen Chipkarten und Mobiltelefonen von verschiedenen Herstellern, ist eine starke internationale Standardisierung der API-Schnittstelle ein erstrebenswertes Ziel.

Die Standardisierung von APDU-Befehlen ist jedoch ein Prozess, der oft langsamer abläuft als die technische Entwicklung der Anwendungen. Aus diesem Grund können insbesondere die konventionellen Chipkarten nicht alle Wünsche der Anwender und insbesondere nicht alle Wünsche der Dienstanbieter oder Telekommunikationsnetzbetreiber erfüllen. Funktionalitäten einer Chipkarte die technisch schon realisierbar und manchmal sogar in der Karte implementiert sind, können meistens erst nach der nächsten Standardisierung der APDU-Spezifikation angeboten werden.

Es ist daher ein Ziel der vorliegenden Erfindung, ein Verfahren anzubieten, mit welchem eine erste Anwendung auf Komponenten, beispielsweise auf Softwarefunktionen, einer zweiten Anwendung zugreifen kann, auch wenn kein APDU in der API-Schnittstelle vorgesehen ist.

Ein anderes Ziel ist es, eine Chipkarte anzubieten, die neue Komponenten zur Verfügung stellen kann, ohne dass dafür neue APDU-Befehle standardisiert werden müssen.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass eine erste Anwendung eine fehlgebrauchte standardisierte Dataeinheit an eine zweite Anwendung sendet, und dass die benannte zweite Anwendung erkennt, dass die benannte Dataeinheit fehlgebraucht wurde und dementsprechend die benannte Komponente zur Verfügung stellt.

Standardisierte Dataeinheiten, beispielsweise APDU, werden beispielsweise fehlgebraucht, indem sie mit speziellen Parametern, beispielsweise mit unmöglichen oder mit sehr unwahrscheinlichen Parametern im Vorsatz versehen werden. Fehlgebrauchte APDU können aber auch durch eine Änderung des Inhaltsteils gekennzeichnet werden.

Im Folgenden werden anhand der beigefügten Figuren bevorzugte Ausführungsbeispiele der Erfindung näher beschrieben:
Figur 1: schematische Ansicht eines Systems mit einer konventionellen Chipkarte.
Figur 2: schematische Ansicht eines erfindungsgemässen APDU-Befehls.
Figur 3: schematische Ansicht eines Systems mit einer ersten Variante einer erfindungsgemässen Chipkarte.
Figur 4: schematische Ansicht eines Systems mit einer zweiten Variante einer erfindungsgemässen Chipkarte.
Figur 5: schematische Ansicht eines Systems mit einer dritten Variante einer erfindungsgemässen Chipkarte.
Figur 6: schematische Ansicht eines Systems mit einer vierten Variante einer erfindungsgemässen Chipkarte.

Obwohl die nachfolgende Beschreibung nur den speziellen Fall einer API-Schnittstelle zwischen einer ersten Anwendung in einem Mobiltelefon und einer zweiten Anwendung in einer Chipkarte erklärt, wird der Fachmann verstehen, dass die vorliegende Erfindung auch für andere API-Schnittstellen zwischen allen möglichen Anwendungen verwendet werden kann.

Insbesondere bezieht sich die nachfolgende Beschreibung auf den speziellen Fall einer Chipkarte, die als Identifizierungsmodul in einem digitalen zellularen Mobiltelefon eingesetzt wird, beispielsweise eine SIM-Karte (Subscriber Identification Module) oder eine WIM-Karte (Wireless Application Protocol Identification Module), die beispielsweise in einem GSM (Global System for Mobile Telecommunication), WAP (Wireless Application Protocol) oder UMTS-Mobiltelefon eingesetzt werden kann. Der Fachmann wird jedoch verstehen, dass die vorliegende Erfindung auch mit anderen Typen von Chipkarten, beispielsweise mit JAVA-Cards (Warenzeichen von SUN Microsystems) oder mit OpenCard-Karten angewendet werden kann.

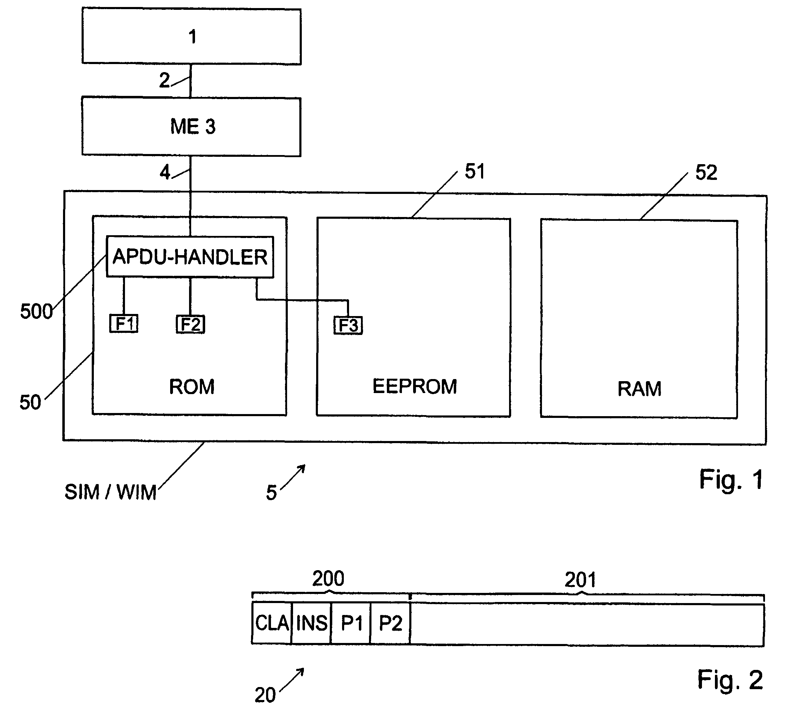

Die Figur 1 zeigt in schematischer Weise ein Beispiel eines konventionellen Systems mit einer API-Schnittstelle 2,4. Das System umfasst ein Endgerät 3 (Mobile Equipment ME) und eine konventionelle SIM- und/oder WIM-Karte 5. Eine Anwendung 1, beispielsweise ein Browser oder ein Anwendungsprogramm, beispielsweise ein Programm von einem Dienstanbieter, wird von nicht dargestellten Datenverarbeitungsmitteln im Mobilgerät 3 ausgeführt. Die Anwendung 1 kommuniziert mit dem Mobilgerät 3 über eine API-Schnittstelle 2 (Application Protocol Interface) welche hier nicht detailliert wird.

Das Mobilgerät 3 kommuniziert mit der SIM-Karte 5 über eine andere API-Schnittstelle 4. Das Mobilgerät 3 übernimmt üblicherweise die Rolle des Meisters der Kommunikation über diese Schnittstelle während die SIM-Karte 5 als Sklave antwortet. Es sind aber auch Protokollvarianten bekannt (beispielsweise gemäss SIM-Toolkit, i.e. GSM 11.14), in welchen die SIM-Karte zumindest temporär die Rolle des Meisters übernimmt.

Ein Schritt im API-Protokoll besteht aus der Sendung eines Befehls an die Chipkarte 5, aus der Ausführung des Befehls durch die Karte und gegebenenfalls aus der Sendung einer Antwort an das Mobilgerät 3, die an die Anwendung 1 weitergeleitet wird. Über die Schnittstelle 4 werden deshalb entweder Befehle oder Antworten ausgetauscht. Parameter können sowohl in den Befehlen und/oder in den Antworten enthalten sein.

Diese Fragen und Befehle werden mit standardisierten Protokoll-Dataeinheiten (APDU - Application Protocol Data Unit) kodiert. Einige standardisierte APDU für ISO-Chipkarten sind in der Norm ISO/IEC 7816-4:1995(E) beschrieben. Zusätzliche APDU wurden für SIM-Karten und für WIM-Karten definiert, um die Funktionalität der API-Schnittstelle 4 zu erweitern.

Die Figur 2 zeigt die typische Struktur einer Dataeinheit (APDU) 20. Die Dataeinheit umfasst einen obligatorischen Vorsatz (Header) 200 mit vier Bytes und einen optionalen Inhaltsteil (Body) 201 mit einer variablen Länge.

Der Vorsatz enthält ein erstes Byte (CLA), das verwendet wird, um unter anderem anzugeben welche API-Version die Dataeinheit befolgt. Ein zweites Byte (INS) gibt die Instruktion an, die von der Chipkarte 5 ausgeführt werden muss oder gerade ausgeführt wurde. Je nach Instruktionen können noch zwei Parameter P1 und P2 angegeben werden. Wenn eine Instruktion keinen Parameter P1 und/oder P2 verlangt, muss dieser Parameter auf Null gesetzt werden.

Der optionale Inhaltsteil 201 enthält Daten und mindestens ein Byte, das die Länge dieser Daten und/oder die maximale Länge der erwarteten Antwort angibt.

Die konventionelle Chipkarte 5 umfasst im allgemeinen ein ROM 50, ein EEPROM 51 und ein RAM 52, sowie nicht dargestellte Datenverarbeitungsmittel. Die ROM beträgt heutzutage typischerweise 64 Kbytes und enthält üblicherweise das Betriebssystem, eine Java virtuelle Maschine (JVM, Warenzeichen von SUN Microsystems) und verschiedene Komponenten F1, F2, .., beispielsweise JavaBeans, Applets oder Programme, die verschiedene Funktionen F durchführen können. Im EEPROM 51 werden auch Komponenten abgelegt, beispielsweise Komponenten die als Applet nach der Personalisierung der Karte ferngeladen wurden sowie persönliche Daten des Benutzers, beispielsweise ein Telefonverzeichnis, ein elektronisches Zertifikat, profilrelevante Informationen, usw. Die EEPROM kann beispielsweise 16 oder 32 Kilobytes umfassen. Im RAM 52 werden temporäre Daten abgelegt, beispielsweise temporäre Variablen. Weiter können im EEPROM Applikationen und Applets gespeichert werden.

Ein Dataeinheit-Automat 500, öfter APDU-Handler genannt, empfängt die APDU des Mobilgerätes 3 welche über die API-Schnittstelle 4 empfangen wurden und analysiert den Vorsatz 200, insbesondere die Bytes CLA und INS, um den Befehl an die betroffene Komponente F1, F2, .. weiterzuleiten, die den Befehl ausführen kann. Der APDU-Handler 500 kann dann die Antwort dieser Komponente empfangen und diese Antwort über die API-Schnittstelle 4 an das Mobilgerät 3 senden.

Der APDU-Handler 500 wird üblicherweise im ROM-Teil 50 implementiert. Ein Problem mit dieser Konfiguration ist, dass das Mobilgerät 3 und die Anwendung 1 auf neue Komponenten G1, G2, G3, in der Karte, beispielsweise im ROM, im EEPROM oder im RAM, nicht zugreifen können, solange kein APDU 20 für den Zugriff auf diese Komponenten standardisiert wird. Auch wenn ein solches APDU definiert und standardisiert wird, können bereits verteilte Chipkarten 5 die in der Karte vorhandenen neuen Komponenten G1, G2, G3 nicht zur Verfügung stellen, wenn sie erst über einen konventionellen APDU-Handler 500 verfügen, der dieses später definierte APDU nicht erkennen kann. Aus diesen Gründen können neue Funktionalitäten die durch die dauernde und schnelle Entwicklung der Chipkarten möglich wären, nur langsam verbreitet werden.

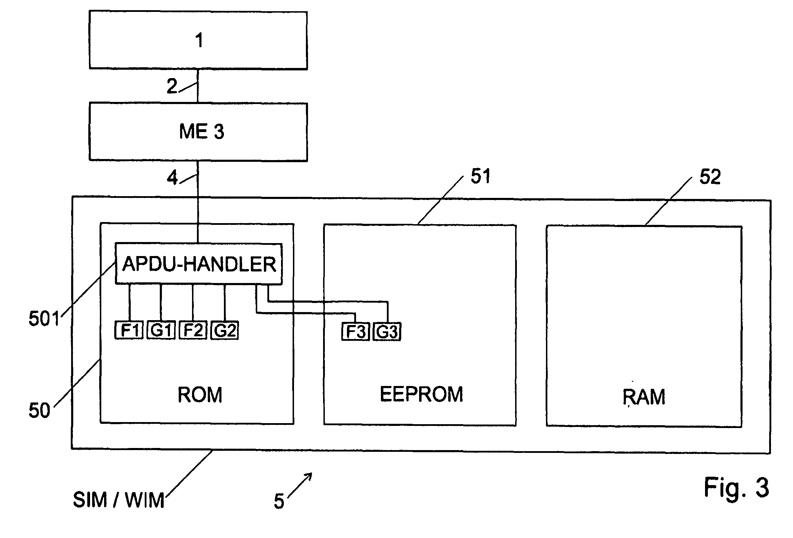

Die Figur 3 zeigt ein Beispiel einer ersten Variante einer erfindungsgemässen Chipkarte 5, beispielsweise eine SIM oder WIM-Karte, die diese Probleme lösen kann. Gleiche oder vergleichbare Merkmale werden in allen Figuren mit gleichen Bezugszeichen verwendet und werden nicht mehr beschrieben, solange dies nicht benötigt wird.

In dieser Variante wird die Anwendung 1 so programmiert, dass sie fehlgebrauchte APDU an das Mobilgerät 3 übergibt, um auf Komponenten G1, G2, G3 in der Karte 5 zuzugreifen, für welche keine APDU standardisiert wurden. Diese fehlgebrauchten APDU werden vom Mobilgerät 3 empfangen und über die Schnittstelle 4 der Karte 5 weitergeleitet.

Der APDU-Handler 501 in der Karte wurde modifiziert, damit er diese speziellen, fehlgebrauchten APDU erkennen kann und sie dementsprechend an die neuen Komponenten G1, G2, G3,... übergibt.

Die Anwendung 1 kann APDU auf verschiedene Arten fehlbrauchen, damit der modifizierte APDU-Handler 501 sie erkennen kann.

Theoretisch wäre es möglich, die Bytes CLA und/oder INS des Vorsatzes 200 zu manipulieren, damit sie keiner API-Version oder keiner standardisierten Instruktion dieses API entsprechen. Diese Variante wird jedoch wegen des Konfliktrisikos mit einer Weiterentwicklung des API-Protokolls nicht bevorzugt.

In einer bevorzugten Variante der Erfindung werden stattdessen standardisierte APDU für existierende Funktionen x = F (P1, P2), das heisst existierende CLA- und INS-Bytes, verwendet und mit nicht kohärenten oder nicht tolerierten Parametern P1, P2 versehen. Beispielsweise kann ein APDU fehlgebraucht werden, indem Parameter angegeben werden, wenn keine Parameter verlangt werden. APDU können auch fehlgebraucht werden, indem Parameterwerte für P1 und/oder P2 angegeben werden, die entweder unmöglich, nicht erwartet oder sehr unwahrscheinlich sind. Diese Variante hat den Vorteil, dass die Länge der APDU nicht geändert wird und der Fehlbrauch leicht detektiert werden kann, da nur ein oder zwei Bytes dekodiert werden müssen.

Falls die aufgerufene neue Komponente G1, G2, oder G3 in der Chipkarte Parameter verlangt, können diese Parameter in P1 und/oder P2 verpackt werden. Ein Konvertierungsprogramm in der Anwendung 1 macht die notwendigen Parameterformatanpassungen, beispielsweise wenn die neue Komponente G1, G2, G3,.. binäre Daten verlangt und das fehlgebrauchte APDU nur ASCII-Codes annimmt.

In einer anderen Variante der Erfindung wird der Vorsatz 200 gar nicht geändert und kann somit nicht vom Vorsatz eines normalen APDU unterschieden werden. Stattdessen werden spezielle Parameter im Inhaltsteil 201 verwendet. Der Inhaltsteil eines fehlgebrauchten APDU kann beispielsweise entweder unmögliche, völlig unerwartete und sehr unwahrscheinliche Daten für die im Vorsatz angegebene Instruktion enthalten. In einer Variante entspricht die angegebene Datenlänge nicht der übermittelten Datenlänge. In einer anderen Variante sind im Inhaltsteil 201 Daten enthalten, für eine Instruktion die keine Daten verlangt.

Diese verschiedene Varianten können auch kombiniert werden, indem beispielsweise der Vorsatz und der Inhalt beide fehlgebraucht werden. Andere Möglichkeiten, eines bestehenden APDU fehlzugebrauchen, können im Rahmen dieser Erfindung vom Fachmann realisiert werden.

Der modifizierte APDU-Handler 501 prüft, ob das empfangene APDU 20 auf eine dieser Weisen fehlgebraucht wurde und leitet dieses APDU, wenn ein solcher Fehlgebrauch festgestellt wird, an die neue Komponente G1, G2, G3,..., weiter. Wurden Parameter für die neue Komponente G1, G2, G3, ... in Parametern des fehlgebrauchten APDU kodiert, sorgt ein Programm für die Dekodierung. Wenn kein Fehlgebrauch festgestellt wird, wird das APDU an eine konventionelle Komponente F1, F2, .. übergegeben.

Die neuen Komponenten G1, G2, G3, .. können im ROM 50 oder im EEPROM 51 enthalten sein. Es können ausserdem temporär im RAM 52 abgelegte Komponenten zur Verfügung gestellt werden. Wenn die Chipkarte 5 wenigstens temporär die Rolle des Meisters der Schnittstelle 4 spielen kann, kann sie mit diesem Mechanismus ausserdem auf Komponenten, beispielsweise auf Applets, zugreifen, die vom Mobilgerät 3 zur Verfügung gestellt werden. Es ist sogar möglich, dass der APDU-Handler 501 auf Komponenten zugreift, die sich in einer externen Vorrichtung befinden, welche beispielsweise über eine kontaktlose Schnittstelle, beispielsweise eine infrarote, RFID oder Bluetooth-Schnittstelle, mit dem Mobilgerät 3 verbunden ist.

Diese mit der Figur 3 dargestellte Variante ermöglicht der Anwendung 1 und dem Mobilgerät 3 auf Komponenten G1, G2, G3 der Chipkarte 5 zuzugreifen, ohne dass dafür neue APDU in der API-Schnittstelle 4 standardisiert werden müssen. Allerdings hat diese Variante den Nachteil, dass die fehlgebrauchten APDU und die entsprechend angerufene Komponenten schon vor der Herstellung des APDU-Handlers 501 im ROM-Teil 50 definiert werden müssen. Nach der Kartenverteilung können höchstens Änderungen an der im EEPROM 51, im RAM 52 oder im Mobilgerät 3 enthaltenen und durch dieses fehlgebrauchte APDU angerufenen Komponente G3 gemacht werden.

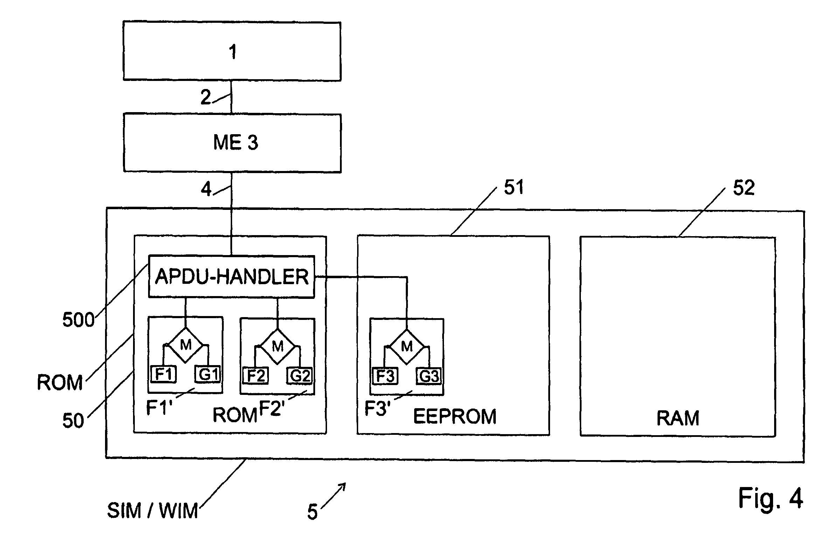

Die Figur 4 zeigt eine andere Variante der Erfindung, in welcher der APDU-Handler 500 keine Anpassung im Vergleich zur Figur 1 braucht. Wie in einer konventionellen Chipkarte 5 gemäss Figur 1 leitet er die empfangenen APDU an Komponenten weiter, wobei diese Komponenten im ROM 50 oder auch im EEPROM 51 enthalten sein können.

In diesen Komponenten F1', F2',.. wird geprüft, ob die vom APDU-Handler 500 empfangenen Dataeinheinheiten in der oben angegebenen Art fehlgebraucht wurden (Fehlgebrauchtest m). Ist dies nicht der Fall wird das APDU an eine konventionelle Komponente übergegeben. Wurde ein Fehlgebrauch festgestellt, wird indessen die Dataeinheit an eine neue Komponente G1, G2, G3... weitergeleitet. Man wird verstehen, dass sich die normale Komponente F1, F2, .., die von einem nicht fehtgebrauchten APDU gerufen wird, sowie die neue Komponente G 1, G2, .., die erst bei APDU-Fehlgebräuchen verwendet wird, in anderen Speicherbereichen 50, 51, 52, 3 befinden können. Auf diese Weise kann beispielsweise eine Komponente F3' welche sich im EEPROM 51 befindet redefiniert werden, um wenn sie ein fehigegebrauchtes APDU erhält auf eine Komponente im ROM 50 zuzugreifen.

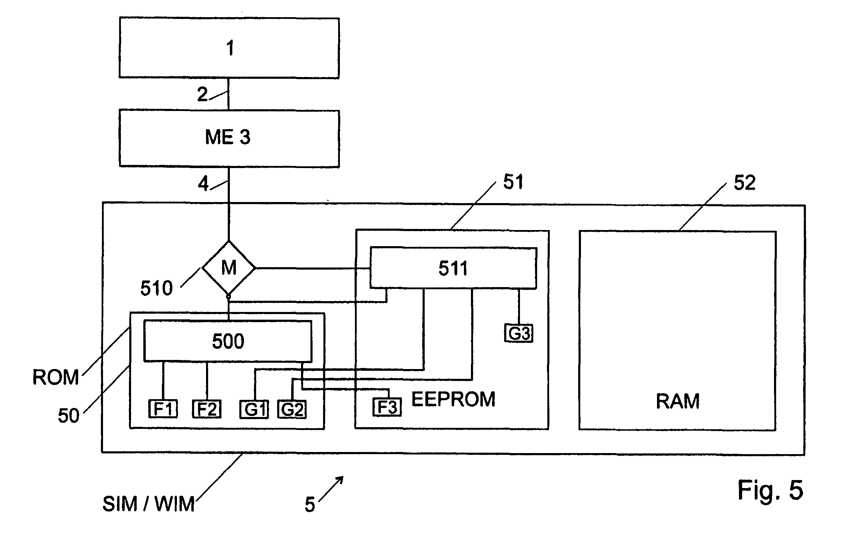

Die Figur 5 zeigt eine weitere Variante der Erfindung, in welcher ein Modul 510 alle über die API-Schnittstelle 4 empfangenen APDU 20 auf eventuelle Fehlgebräuche prüft. Falls kein Fehlgebrauch detektiert wird, wird das APDU an einen konventionellen APDU-Handler 500 weitergeleitet, der dieses APDU einer konventionellen Komponente F1, F2, F3, ... übergibt. Wird hingegen ein APDU-Fehlgebrauch vom Modul 510 festgestellt, wird das fehlgebrauchte APDU an einen neuen, modifizierten APDU-Handler 511 geleitet, der die für dieses fehlgebrauchte APDU vorgesehene Komponente G1, G2, G3,... abruft.

Der neue APDU-Handler 511 befindet sich vorzugsweise im EEPROM 51. Auf diese Weise kann er auch nach der Herstellung des ROMS 50 geändert werden, um beispielsweise den Zugriff auf neue in der Zwischenzeit implementierte Komponenten G1, G2, G3 zu gewährleisten. Vorzugsweise befindet sich auch das Test-Modul 510 im EEPROM, damit neue Typen von APDU-Fehlgebräuchen nach der Herstellung des ROMS, beispielsweise erst bei der Personalisierung oder sogar nach der Verteilung der Chipkarten entdeckt werden können. Das Test-Modul 510 könnte sich aber auch im ROM 50 oder gar im RAM 52 befinden.

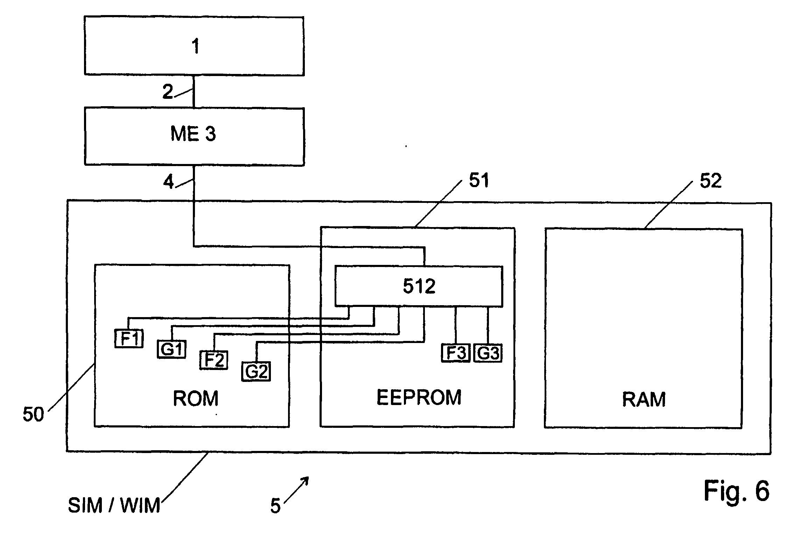

Die Figur 6 zeigt eine weitere Variante der erfindunsgemässen Chipkarte, in welcher der normale APDU-Handler welcher sich üblicherweise im ROM 50 befindet durch einen modifizierten APDU-Handler 512 im EEPROM ersetzt wird. Ausserdem kann der APDU-Handler 512 eventuelle APDU-Fehlgebräuche entdecken und in diesem Fall eine andere Komponente G1, G2, G3, ... abrufen. Diese Variante erlaubt eine grosse Flexibilität, da neue Komponenten G1, G2, G3 und neue Fehlgebrauchtypen zu jeder Zeit in der Karte 5 implementiert werden können.

In einer nicht dargestellten Variante kann sich der modifizierte APDU-Handler auch im RAM 52 befinden, damit er einfach durch das Betriebssystem der Chipkarte oder durch die Anwendung 1 geändert werden kann.

Wir werden jetzt ein Beispiel des Abrufs einer Komponente durch einen APDU-Fehlgebrauch im Detail beschreiben.

Ein Anwendungsprogramm 1, beispielsweise ein Browser in einem WAP-fähigen Mobilfunkteiefon 3, will eine Datei T mit einem Schlüssel P von einer WIM-Karte 5 verschlüsseln lassen. Die Anwendung 1 will die Verschlüssefungsfunktion R=V(T,P) vom Mobilgerät 2 ausführen lassen und erwartet vom Mobilgerät 5, dass es mit der von der WIM-Karte 5 verschlüsselten Datei R antwortet.

Der WIM-Karten-Hersteller hat die notwendige Komponenten, unter anderem den Schlüssel P und eine Verschlüsselungskomponente G1, G2, G3 (beispielsweise ein JAVA-Applet im EEPROM 51), in der Karte 5 implementiert. Es wurde aber kein APDU über die API 4 definiert, welches einen Zugriff auf diese vorhandene Verschlüsselungskomponente gewährt, so dass das Mobilgerät 3 diese Verschlüsselungsfunktion nicht ausführen lassen kann.

Um trotzdem auf diese Komponente zuzugreifen, kann die Anwendung 1 die Ausführung einer anderen Funktion verlangen, für welche ein APDU 20 für die Schnittstelle 4 standardisiert wurde. Beispielsweise kann die Anwendung 1 die Signierungsfunktion R=S(T,P) ausführen lassen, in welcher T der zu signierenden Datei entspricht, P den Signierungsparametern (beispielsweise dem zu verwendenden Schlüssel) und R der signierten Datei.

Damit die Chipkarte 5 erkennen kann, dass sie die Datei T verschlüsseln und nicht signieren soll, muss die Anwendung 1 spezielle Parameter P für die Funktion S verwenden, beispielsweise unmögliche, unerwartete und/oder sehr unwahrscheinliche Parameter P. Es können auch Parameter angegeben werden, wenn kein Parameter für eine bestimmte Funktion verlangt wird, oder Parameter eines falschen Typs verwendet werden.

Die Anwendung 1 muss ausserdem den Parameter T für die neue Verschlüsselungsfunktion konvertieren und beispielsweise in einen fehlgebrauchten Parameter T, P der Signierungsfunktion verpacken.
Das Mobilgerät 3, das das von der Anwendung 1 empfangene APDU mit einem Signierungsbefehl erhält, übergibt dieses der Karte 5. Die Chipkarte 5 empfängt dann dieses APDU über die API-Schnittstelle 4 und kann mit dem oben beschriebenen Mechanismus erkennen, dass das APDU fehlgebraucht wurde, und dass die angegebenen Parameter P1, P2, und/oder der Inhaltsteil 201 spezielle Kriterien betreffen, die bei einem normalen Gebrauch dieses APDU nie (oder äusserst selten) betroffen werden. Wie oben beschrieben lässt in diesem Fall die Chipkarte eine andere Funktion G1, G2, G3 (hier eine Verschlüsselungsfunktion) ausführen, wie wenn diese Kriterien nicht erfüllt worden wären.

Die angerufene Komponente G1, G2, oder G3 kann den Parameter T umkonvertieren, und diese Datei verschlüsseln. Die verschlüsselte Datei wird dann mit einem anderen APDU über die Schnittstelle 4 und über das Mobilgerät 3 an die Anwendung 1 übergegeben.

Auf diese Weise kann eine Anwendung 1 auf Komponenten einer Chipkarte 5 zugreifen, die bei der Herstellung der Karte noch nicht vorgesehen waren und für die kein APDU standardisiert worden ist, beispielsweise auf Komponenten G1, G2, G3.. , die erst nach bei der Personalisierung oder sogar nach der Verteilung der Karte über eine Luftschnittstelle als Applet ferngeladen wurden.

In einer Variante der Erfindung kann jedes APDU die Durchführung von mehreren verschiedenen Funktionen in der Chipkarte 5 auslösen. Ein spezielles fehlgebrauchtes APDU definiert, in welchem Zustand sich die Karte befindet und welches Set von Funktionen zukünftig verwendet werden muss. Diese Variante erlaubt es, durch das Senden eines einzigen fehlgebrauchten APDU mehrere oder alle Komponenten der Chipkarte zu ersetzen. Beispielsweise können auf diese Weise alle Parameter und Komponenten die im ROM 50 abgelegt sind temporär ersetzt werden. Ein anderes fehlgebrauchtes APDU kann dann die Chipkarte in ihren normalen Zustand zurückbringen.

Der Fachmann wird ausserdem verstehen, dass nicht nur die im Mobilgerät 3 ausgeführten Anwendungen 1 mit dem erfindungsgemässen Verfahren auf zusätzliche Komponenten G1, G2, G3, .. der Chipkarte 5 zugreifen können, sondern dass auch andere Vorrichtungen, die beispielsweise über ein Mobilfunknetz, über WAP, und/oder über eine kontaktlose Schnittstelle im Nahbereich, beispielsweise über eine infrarote-, RFID- und/oder Bluetooth-Schnittstelle, standardisierte APDU fehlgebrauchen können, um auf diese neue Komponenten zuzugreifen.

Ausserdem betrifft die Erfindung auch Anwendungen 1 die Funktionen fehlgebrauchen um auf sonst unzugängliche Komponenten einer Chipkarte zugreifen zu können, sowie eine Vorrichtung 3 mit folgenden Merkmalen:
einen nicht dargestellten Speicherbereich,
nicht dargestellte Datenverarbeitungsmittel, die auf den benannten Speicherbereich zugreifen können,
wobei ein Programm im benannten Speicherbereich enthalten ist, das von den benannten Datenverarbeitungsmitteln ausgeführt werden kann,
einen nicht dargestellten Chipkartenleser, mit weichem Befehle über eine standardisierte API-Schnittstelle an eine Chipkarte 5 gesendet werden können,
wobei das benannte Programm Instruktionen enthält, um das Senden von mindestens einer fehlgebrauchten Dataeinheit auszulösen, um auf Komponenten in der Chipkarte zuzugreifen, für welche kein standardisierter Befehl in der API-Schnittstelle zwischen der Chipkarte und der externen Vorrichtung vorgesehen ist.

## Patentansprüche

1. Verfahren, mit welchem eine erste Anwendung (3) über eine logische Schnittstelle (4) auf Komponenten (G1, G2, G3, ..) einer zweiten Anwendung (5) zugreifen kann, wenn keine standardisierte Dataeinheit in der benannten logischen Schnittstelle (4) definiert ist,
**dadurch gekennzeichnet, dass** die benannte erste Anwendung (3) eine fehlgebrauchte standardisierte Dataeinheit (20) an die benannte zweite Anwendung (5) sendet,
und dass die benannte zweite Anwendung (5) erkennt, dass die benannte Dataeinheit (20) fehlgebraucht wurde, und dementsprechend die benannte Komponente zur Verfügung stellt.

2. Verfahren gemäss dem vorhergehenden Anspruch, in welchem die benannte zweite Anwendung anhand des Vorsatzes (200) der Dataeinheit (20) erkennt, dass die Dataeinheit fehlgebraucht wurde.

3. Verfahren gemäss dem vorhergehenden Anspruch, in welchem der benannte Vorsatz mindestens folgende Bytes umfasst:
mindestens ein Byte (CLA), das die Klasse der Dataeinheit angibt,
mindestens ein Byte, das die auszuführende Instruktion angibt,
mindestens zwei Bytes, die mindestens zwei Parametern für die benannte auszuführende Instruktion entsprechen,
wobei die benannte zweite Anwendung anhand des benannten Parameters des Vorsatzes (200) der Dataeinheit (20) erkennt, dass die Dataeinheit fehlgebraucht wurde.

4. Verfahren gemäss einem der vorhergehenden Ansprüche, in welchem die benannte zweite Anwendung anhand des Inhaltsteils (201) der Dataeinheit (20) erkennt, dass die Dataeinheit fehlgebraucht wurde.

5. Verfahren gemäss einem der vorhergehenden Ansprüche, in welchem die benannte erste Anwendung (3) über eine API-Schnittstelle (4), über welche APDU-Befehle übergeben werden, auf Komponenten (G1, G2, G3, ..) der benannten zweiten Anwendung (5) zugreifen kann, wenn keine standardisierte Dataeinheit in der benannten API-Schnittstelle (4) definiert ist.

6. Verfahren gemäss einem der vorhergehenden Ansprüche, in welchem die benannte zweite Anwendung von einer Chipkarte (5) zur Verfügung gestellt wird.

7. Verfahren gemäss dem vorhergehenden Anspruch, in welchem die benannte zweite Anwendung von einer SIM-Karte (5) zur Verfügung gestellt wird.

8. Verfahren gemäss einem der Ansprüche 6 oder 7, in welchem die benannte zweite Anwendung von einer WIM-Karte (5) zur Verfügung gestellt wird.

9. Verfahren gemäss einem der Ansprüche 6 bis 8, in welchem die benannte Chipkarte einen modifizierten APDU-Handler (501; 511; 512) umfasst, der empfangene fehlgebrauchte Dataeinheiten (20) erkennt, und sie an die zuständige Komponente (G1, G2, G3, ..) in der benannten Chipkarte (5) weiterleitet.

10. Verfahren gemäss dem vorhergehenden Anspruch, in welchem der benannte modifizierte APDU-Handler (501) im ROM (50) abgelegt ist.

11. Verfahren gemäss dem Anspruch 9, in welchem der benannte modifizierte APDU-Handler (511; 512) im EEPROM (51) abgelegt ist.

12. Verfahren gemäss einem der Ansprüche 1 bis 8, in welchem der Fehlgebrauch von Dataeinheiten (20) durch entsprechende Komponenten (F1', F2', F3',..) erkannt wird.

13. Verfahren gemäss einem der Ansprüche 1 bis 8, in welchem der Fehlgebrauch von Dataeinheiten (20) durch ein Test-Modul (510) erkannt wird, das die benannte Dataeinheit an einen ersten APDU-Handler (500) weitergibt wenn kein Fehlgebrauch festgestellt wird, und an einen zweiten APDU-Handler (511) wenn ein Fehlgebrauch festgestellt wird.

14. Verfahren gemäss dem vorhergehenden Anspruch, in welchem das benannte Test-Modul (510) im ROM (50) abgelegt ist.

15. Verfahren gemäss dem Anspruch 13, in welchem das benannte Test-Modul (510) im EEPROM (51) abgelegt ist.

16. Verfahren gemäss einem der vorhergehenden Ansprüche, in welchem die benannte neue Komponente (G1, G2, G3, ..) aus einem Programm im EEPROM (51) besteht.

17. Verfahren gemäss einem der vorhergehenden Ansprüche, in welchem die benannte neue Komponente (G1, G2, G3, ..) im RAM (52) aus einem Programm im RAM besteht.

18. Verfahren gemäss einem der vorhergehenden Ansprüche, in welchem die benannte neue Komponente (G1, G2, G3, ..) aus einem Programm in der externen Vorrichtung (3) besteht.

19. Verfahren gemäss einem der vorhergehenden Ansprüche, in welchem die benannte Komponente (G1, G2, G3, ..) aus einem Programm in einer zweiten externen Vorrichtung besteht, welche über eine kontaktlose Schnittstelle kommuniziert.

20. Chipkarte (5) die über eine logische Schnittstelle (4) mit einer externen Vorrichtung (3) kommunizieren kann, wobei standardisierte Dataeinheiten (20) für diese Kommunikation definiert sind,
**dadurch gekennzeichnet, dass** die benannte Chipkarte fehlgebrauchte standardisierte Dataeinheiten (20) erkennen kann, und dass sie derart gestattet ist, dass sie andere Komponente (G1, G2, G3..) zur Verfügung stellt, wenn solche fehlgebrauchte Dataeinheiten erkannt worden sind, als die Komponente, die sie zu Verfügung stellt, wenn keine fehigebrauchten Dataeinheiten erkannt worden sind.

21. Chipkarte gemäss dem vorhergehenden Anspruch, die anhand des Vorsatzes (200) der Dataeinheit (20) erkennen kann, dass die Dataeinheit fehlgebraucht wurde.

22. Chipkarten gemäss dem vorhergehenden Anspruch, in welcher der benannte Vorsatz mindestens folgende Bytes umfasst:
mindestens ein Byte (CLA), das die Klasse der Dataeinheit angibt,
mindestens ein Byte, das die auszuführende Instruktion angibt,
mindestens zwei Bytes, die mindestens zwei Parametern für die benannte auszuführende Instruktion entsprechen,
wobei die benannte Chipkarte derart gestaltet ist, dass sie anhand des benannten Parameters des Vorsatzes (200) der Dataeinheit (20) erkennt, dass die Dataeinheit fehlgebraucht wurde.

23. Chipkarte gemäss dem Anspruch 20, die derart gestaltet ist, dass sie anhand des Inhaltsteils (201) der Dataeinheit (20) erkennt, dass die Dataeinheit fehlgebraucht wurde.

24. Chipkarte gemäss einem der Ansprüche 20 bis 23, in weicher die benannte logische Schnittstelle (4) eine API-Schnittstelle ist.

25. Chipkarte gemäss dem vorhergehenden Anspruch, die eine SIM-Karte ist.

26. Chipkarte gemäss einem der Ansprüche 24 oder 25, die eine WIM-Karte ist.

27. Chipkarte gemäss einem der Ansprüche 20 bis 26, die einen modifizierten APDU-Handler (501; 511; 512) zum Erkennen der empfangenen fehlgebrauchten Dataeinheiten (20) umfasst, und die derart gestaltet ist, dass sie die benannten fehlgebrauchte Dataeinheiten (20) an die zuständige Komponente (G1, G2, G3, ..) in der benannten Chipkarte (5) weiterleitet.

28. Chipkarte gemäss dem vorhergehenden Anspruch, in welcher der benannte modifizierte APDU-Handler (510) im ROM (50) abgelegt ist.

29. Chipkarte gemäss dem Anspruch 27, in welcher der benannte modifizierte APDU-Handler (511; 512) im EEPROM (51) abgelegt ist.

30. Chipkarte gemäss einem der Ansprüche 20 bis 26, derart ausgestaltet, daß der Fehlgebrauch von Dataeinheiten (20) durch die entsprechende Komponente (F1', F2', F3',..) erkannt wird.

31. Chipkarte gemäss einem der Ansprüche 20 bis 26, mit einem Test-Modul (510) zum Erkennen des Fehlgebrauchs von Dataeinheiten (20), das derart gestaltet ist, dass es die benannte Dataeinheit an einen ersten APDU-Handler (500) weitergibt wenn kein Fehlgebrauch festgestellt wird, und an einen zweiten APDU-Handler (511) wenn ein Fehlgebrauch festgestellt wird.

32. Chipkarte gemäss dem vorhergehenden Anspruch, in welcher das benannte Test-Modul (510) im ROM (50) abgelegt ist.

33. Chipkarte gemäss dem Anspruch 31, in welcher das benannte Test-Modul (510) im EEPROM (51) abgelegt ist.

34. Chipkarte gemäss einem der Ansprüche 20 bis 33, in welcher die benannte Komponente (G1, G2, G3, ..) im EEPROM (51) gespeichert ist.

35. Chipkarte gemäss einem der Ansprüche 20 bis 34, in welcher die benannte Komponente (G1, G2, G3, ..) im RAM (52) gespeichert ist.

36. Vorrichtung (3), die folgende Merkmale umfasst:
einen Speicherbereich,
Datenverarbeitungsmittel, die auf den benannten Speicherbereich zugreifen können,
wobei im benannten Speicherbereich ein Programm (1) enthalten ist, das von den benannten Datenverarbeitungsmitteln ausgeführt werden kann,
einen Chipkartenleser, mit welchem Befehle über eine standardisierte API-Schnittstelle (4) an eine Chipkarte (5) gesendet werden können,
**dadurch gekennzeichnet, dass** das benannte Programm Instruktionen enthält, um das Senden von mindestens einer fehigebrauchten Dataeinheit (20) zu verursachen, um auf Komponenten (G1, G2, G3) in der Chipkarte (5) zuzugreifen, für welche kein standardisierter Befehl in der API-Schnittstelle zwischen der Chipkarte und der externen Vorrichtung vorgesehen ist.

## Claims

1. Method with which a first application (3) can access components (G1, G2, G3, ...) of a second application (5) over a logical interface (4), if no standardized data unit has been defined in said logical interface (4),
**characterized in that** said first application (3) sends a misused standardized data unit (20) to said second application (5),
and **in that** said second application (5) recognizes that said data unit (20) has been misused and accordingly makes said components available.

2. Method according to the preceding claim, wherein said second application recognizes on the basis of the header (200) of the data unit (20) that the data unit has been misused.

3. Method according to the preceding claim, wherein said header comprises at least the following bytes:
at least one byte (CLA) indicating the data unit class,
at least one byte indicating the instruction that is to be executed,
at least two bytes corresponding to at least two parameters for the instruction to be executed,
said second application recognizing on the basis of said parameters of the header (200) of the data unit (20) that the data unit has been misused.

4. Method according to one of the preceding claims, wherein said second application recognizes on the basis of the body (201) of the data unit (20) that the data unit has been misused.

5. Method according to one of the preceding claims, wherein said first application (3) can access components (G1, G2, G3, ...) of said second application (5) over an API interface (4) over which APDU orders are transmitted, if no standardized data unit has been defined in said API interface.

6. Method according to one of the preceding claims, wherein said second application is made available by a chip card (5).

7. Method according to the preceding claim, wherein said second application is made available by a SIM card (5).

8. Method according to one of the claims 6 or 7, wherein said second application is made available by a WIM card (5).

9. Method according to one of the claims 6 to 8, wherein said chip card includes a modified APDU handler (501; 511; 512) that recognizes the received misused data units (20) and forwards them to the appropriate component (G1, G2, G3, ...) in said chip card (5).

10. Method according to the preceding claim, wherein said modified APDU handler (501) is stored in the ROM (50).

11. Method according to claim 9, wherein said modified APDU handler (511; 512) is stored in the EEPROM (51).

12. Method according to one of the claims 1 to 8, wherein the misuse of data units (20) is recognized by the corresponding components (F1', F2', F3'...).

13. Method according to one of the claims 1 to 8, wherein the misuse of data units (20) is recognized by a test module (510) that forwards said data unit to a first APDU handler (500) if no misuse has been detected and to a second APDU handler (511) if a misuse has been detected.

14. Method according to the preceding claim, said test module (510) being stored in the ROM (50).

15. Method according to claim 13, wherein said test module (510) is stored in the EEPROM (51).

16. Method according to one of the preceding claims, wherein said new component (G1, G2, G3,...) consists of a program in the EEPROM (51).

17. Method according to one of the preceding claims, wherein said new component (G1, G2, G3,...) consists of a program in the RAM (52).

18. Method according to one of the preceding claims, wherein said new component (G1, G2, G3,...) consists of a program in an external device (3).

19. Method according to one of the preceding claims, wherein said component (G1, G2, G3,...) consists of a program in a second external device that communicates over a contactless interface.

20. Chip card (5) capable of communicating with an external device (3) over a logical interface (4), standardized data units (20) being defined for this communication,
**characterized in that** said chip card is able to recognize misused standardized data units (20) and **in that** it is designed in such a way that it makes another component (G1, G2, G3,...) available if such misused data units have been recognized than the component which it makes available if no misused standardized data units have been recognized.

21. Chip card according to the preceding claim, capable of recognizing on the basis of the header (200) of the data unit (20) that the data unit has been misused.

22. Chip card according to the preceding claim, wherein said header comprises at least the following bytes:
at least one byte (CLA) indicating the data unit class,
at least one byte indicating the instruction that is to be executed,
at least two bytes corresponding to at least two parameters for the instruction to be executed,
said chip card being designed in such a way that it recognizes on the basis of said parameters of the header (200) of the data unit (20) that the data unit has been misused.

23. Chip card according to claim 20, designed in such a way that it is capable of recognizing on the basis of the body (201) of the data unit (20) that the data unit has been misused.

24. Chip card according to one of the claims 20 to 23, wherein said logical interface (4) is an API interface.

25. Chip card according to the preceding claim, being a SIM card.

26. Chip card according to one of the claims 24 or 25, being a WIM card.

27. Chip card according to one of the claims 20 to 26, comprising a modified APDU handler (501; 511; 512) to recognize received misused data units (20) and designed in such a manner that it forwards said misused data units (20) to the appropriate component (G1, G2, G3,...) in said chip card (5).

28. Chip card according to the preceding claim, wherein said modified APDU handler (519) is stored in the ROM (50).

29. Chip card according to claim 27, wherein said modified APDU handler (511; 512) is stored in the EEPROM (51).

30. Chip card according to one of the claims 20 to 26, designed in such a way that the misuse of data units (20) is recognized by the corresponding component (F1', F2', F3', ...).

31. Chip card according to one of the claims 20 to 26, with a test module (510) for recognizing the misuse of data units (20), designed in such a manner that it forwards said data unit to a first APDU handler (500) if no misuse has been detected and to a second APDU handler (511) if a misuse has been detected.

32. Chip card according to the preceding claim, wherein said test module (510) is stored in the ROM (50).

33. Chip card according to claim 31, wherein said test module (510) is stored in the EEPROM (51).

34. Chip card according to one of the claims 20 to 33, wherein said component (G1, G2, G3,...) is stored in the EEPROM (51).

35. Chip card according to one of the claims 20 to 34, wherein said component (G1, G2, G3,...) is stored in the RAM (52).

36. Device (3) comprising the following characteristics:
a storage area,
data processing means that can access said storage area,
said storage area containing a program (1) that can be executed by said data processing means,
a chip card reader with which orders can be sent over a standardized API interface (4) to a chip card (5),
**characterized in that** said program contains instructions for triggering the sending of at least one misused data unit (20) in order to access components (G1, G2, G3) in the chip card (5) for which no standardized order has been provided in the API interface between the chip card and the external device.

## Revendications

1. Procédé avec lequel une première application (3) peut accéder à des composants (G1, G2, G3, ..) d'une deuxième application (5) à travers une interface logique (4) lorsque aucune unité de données standardisée n'est définie dans ladite interface logique (4),
**caractérisé en ce que** ladite première application (3) envoie une unité de donnée standardisée (20) employée de manière erronée à ladite deuxième application (5),
et **en ce que** ladite deuxième application (5) reconnaît que la dite unité de données (20) a été employée de manière erronée et met par conséquent ledit composant à disposition.

2. Procédé selon la revendication précédente, dans lequel ladite deuxième application reconnaît au moyen du préambule (200) de l'unité de données (20) que l'unité de données a été employée de manière erronée.

3. Procédé selon la revendication précédente, dans lequel ledit préambule comprend au moins les octets suivants:
au moins un octet (CLA) qui indique la classe de l'unité de données,
au moins un octet qui indique l'instruction à exécuter,
au moins deux octets qui correspondent à au moins deux paramètres pour ladite instruction à exécuter,
ladite deuxième application reconnaissant au moyen dudit paramètre du préambule (200) de l'unité de données (20) que l'unité de données a été employée de manière erronée.

4. Procédé selon la revendication précédente, dans lequel ladite deuxième application reconnaît au moyen de la partie de contenu (201) de l'unité de données (20) que l'unité de données a été employée de manière erronée.

5. Procédé selon l'une des revendications précédentes, dans lequel ladite première application (3) peut accéder à des composants (G1, G2, G3, ..) de ladite deuxième application (5) à travers une interface API (4) à travers laquelle des ordres APDU sont délivrés, lorsque aucune unité de données standardisée n'est définie dans ladite interface API (4).

6. Procédé selon l'une des revendications précédentes, dans laquelle ladite deuxième application est mise à disposition par une carte à puce (5).

7. Procédé selon la revendication précédente, dans lequel ladite deuxième application est mise à disposition par une carte SIM (5).

8. Procédé selon l'une des revendications 6 ou 7, dans lequel ladite deuxième application est mise à disposition par une carte WIM (5).

9. Procédé selon l'une des revendications 6 à 8, dans lequel ladite carte à puce comprend un manipulateur d'APDU (501; 511; 512) modifié qui reconnaît des unités de données reçues employées de manière erronée et qui les retransmet au composant (G1, G2, G3, ..) compétent dans la carte à puce (5).

10. Procédé selon la revendication précédente, dans lequel ledit manipulateur d'APDU (501) modifié est stocké dans la ROM (50).

11. Procédé selon la revendication 9, dans lequel ledit manipulateur d'APDU (511; 512) modifié est stocké dans l'EEPROM (51).

12. Procédé selon l'une des revendications 1 à 8, dans lequel l'emploi erroné d'unités de données (20) est reconnu par des composants (F1', F2', F3',..) correspondants.

13. Procédé selon l'une des revendications 1 à 8 dans lequel l'emploi erroné d'unités de données (20) est reconnu par un module de test (510), qui retransmet ladite unité de données à un premier manipulateur d'APDU (500) lorsque aucun emploi erroné n'est constaté, et à un deuxième manipulateur d'APDU (511) lorsqu'un emploi erroné est constaté.

14. Procédé selon la revendication précédente, dans lequel ledit module de test (510) est stocké dans la ROM (50).

15. Procédé selon la revendication 13, dans lequel ledit module de test est stocké dans l'EEPROM (51).

16. Procédé selon l'une des revendications précédentes, dans lequel ledit nouveau composant (G1, G2, G3, ..) est constitué d'un programme dans l'EEPROM (51).

17. Procédé selon l'une des revendications précédentes, dans lequel ledit nouveau composant (G1, G2, G3, ..) dans la RAM (52) est constitué d'un programme dans la RAM.

18. Procédé selon l'une des revendications précédentes, dans lequel ledit nouveau composant (G1, G2, G3, ..) est constitué d'un programme dans le dispositif externe (3).

19. Procédé selon l'une des revendications précédentes, dans lequel ledit composant (G1, G2, G3, ..) est constitué d'un programme dans un deuxième dispositif externe qui communique à travers une interface sans contact.

20. Carte à puce (5) qui peut communiquer avec un dispositif externe (3) à travers une interface logique (4), des unités de données (20) standardisées étant définies pour cette communication
**caractérisée en ce que** ladite carte à puce peut reconnaître des unités de données (20) standardisées employées de manière erronée, et **en ce qu'**elle est configurée de sorte qu'elle met un autre composant (G1, G2, G3, ..) à disposition lorsque de telles unités de données employées de manière erronée ont été reconnues, que le composant qu'elle met à disposition lorsque aucune unité de données employée de manière erronée n'a été reconnue.

21. Carte à puce selon la revendication précédente, qui peut reconnaître au moyen du préambule (200) de l'unité de données (20) que l'unité de données a été employée de manière erronée.

22. Cartes à puce selon la revendication précédente, dans laquelle ledit préambule comprend au moins les octets suivants:
au moins un octet (CLA) qui indique la classe de l'unité de données,
au moins un octet qui indique l'instruction à exécuter,
au moins deux octets qui correspondent à au moins deux paramètres pour ladite instruction à exécuter,
ladite carte à puce étant configurée de sorte qu'elle reconnaît au moyen dudit paramètre du préambule (200) de l'unité de données (20) que l'unité de données a été employée de manière erronée.

23. Carte à puce selon la revendication 20, qui est configurée de sorte qu'elle reconnaît au moyen de la partie de contenu (201) de l'unité de données (20) que l'unité de données a été employée de manière erronée.

24. Carte à puce selon l'une des revendication 20 à 23, dans laquelle ladite interface logique est une interface API.

25. Carte à puce selon la revendication précédente, qui est une carte SIM.

26. Carte à puce selon l'une des revendication 24 ou 25, qui est une carte WIM.

27. Carte à puce selon l'une des revendication 20 à 26, qui comprend un manipulateur d'APDU (501; 511; 512) modifié pour la reconnaissance des unités de données (20) reçues employées de manière erronée, et qui est configurée de sorte qu'elle retransmet lesdites unités de données (20) employées de manière erronée au composant (G1, G2, G3, ..) compétent dans ladite carte à puce (5).

28. Carte à puce selon la revendication précédente, dans laquelle ledit manipulateur d'APDU (510) modifié est stocké dans la ROM (50).

29. Carte à puce selon la revendication 27, dans laquelle ledit manipulateur d'APDU (511; 512) modifié est stocké dans l'EEPROM (51).

30. Carte à puce selon l'une des revendication 20 à 26, configurée de sorte que l'emploi erroné d'unités de données (20) est reconnu par le composant (F1', F2', F3', ..) correspondant.

31. Carte à puce selon l'une des revendication 20 à 26, avec un module de test (510) pour la reconnaissance de l'emploi erroné d'unités de données (20), qui est configuré de sorte qu'il retransmet ladite unité de données à un premier manipulateur d'APDU (500) lorsque aucun emploi erroné n'est constaté, et à un deuxième manipulateur d'APDU (511) lorsqu'un emploi erroné est constaté.

32. Carte à puce selon la revendication précédente, dans laquelle ledit module de test (510) est stocké dans la ROM (50).

33. Carte à puce selon la revendication 31, dans laquelle ledit module de test (510) est stocké dans l'EEPROM (51).

34. Carte à puce selon l'une des revendications 20 à 33, dans laquelle ledit composant (G1, G2, G3, ..) est mémorisé dans l'EEPROM (51).

35. Carte à puce selon l'une des revendications 20 à 34, dans laquelle ledit composant (G1, G2, G3, ..) est mémorisé dans la RAM (52).

36. Dispositif (3), qui comprend les caractéristiques suivantes:
une zone de mémoire,
des moyens de traitement des données qui peuvent accéder à ladite zone de mémoire,
un programme (1) étant contenu dans ladite zone de mémoire, qui peut être exécuté par lesdits moyens de traitement des données,
un lecteur de cartes à puce avec lequel des ordres peuvent être envoyés à travers une interface API (4) standardisée à une carte à puce (5),
**caractérisé en ce que** ledit programme contient des instructions pour provoquer l'envoi d'au moins une unité de données (20) employée de manière erronée, pour accéder à des composants (G1, G2, G3) dans la carte à puce (5) pour lesquels aucun ordre standardisé n'est prévu dans l'interface API entre la carte à puce et le dispositif externe.
